# EUROPEAN PATENT APPLICATION

(11) **EP 4 400 199 A1**
(43) Date of publication of application: **17.07.2024**
(21) Application number: 22867287.9
(22) Date of filing: 01.09.2022
(51) Int. Cl.: B01D 53/04, B01D 53/44, B01D 53/81

(54) **ATTACHMENT STRUCTURE FOR ADSORPTION-DESORPTION MEMBER**

(30) Priority: 07.09.2021 JP 2021145153
(71) Applicant: TOYOBO MC Corporation, Osaka 530-0001 (JP)
(72) Inventor: HAYASHI, Toshiaki, Osaka-shi, Osaka 530-0001 (JP); KOHNO, Daiki, Osaka-shi, Osaka 530-0001 (JP)
(74) Representative: Vossius & Partner Patentanwälte Rechtsanwälte mbB
(86) International application number: PCT/JP2022/033000
(87) International publication number: WO 2023/037965

(57) **Abstract**

In an upper portion in the inside of an adsorption and desorption treatment apparatus (100), a plate-shaped member (31), an annular erected wall (32), and an annular plate (33) are provided. The adsorption and desorption member (15) includes a cylindrical adsorption and desorption element (131) and an attachment plate (2) including a flange portion (2F). An attachment region (1B) is provided at a position where the flange portion (2F) and the annular plate (33) are superimposed on each other when the adsorption and desorption member (15) is accommodated in the inside of the adsorption and desorption treatment apparatus (100) by being inserted in an open hole (3A). The attachment region (1B) includes a hexagon head bolt (8) and a nut (5). The flange portion (2F) is provided with a first hole portion (2a). The annular plate (33) is provided with a second hole portion (3a). In the attachment region (1B), the hexagon head bolt (8) is inserted in the first hole portion (2a) and the second hole portion (3a) and a screw portion (8b) of the hexagon head bolt (8) on an annular plate (33) side is tightened with the use of the nut (5), so that hermetic sealing at a position where the flange portion (2F) and the annular plate (33) are contiguous is achieved and a leakage cut-off structure that cuts off leakage of raw gas or carrier gas is formed.

## Description

### TECHNICAL FIELD

The present disclosure relates to a structure for attachment of an adsorption and desorption member.

### BACKGROUND ART

An adsorption and desorption treatment apparatus including an adsorption and desorption member including an adsorption and desorption element has conventionally been known as an organic solvent containing gas treatment system that cleans raw gas containing an organic solvent by separating the organic solvent from raw gas and emits cleaned gas and recovers the organic solvent separated from the raw gas with carrier gas (see PTL 1, PTL 2, and PTL 3).

### CITATION LIST

### PATENT LITERATURE

PTL 1: Chinese Utility Model CN211098282U
PTL 2: Chinese Utility Model CN212327833U
PTL 3: WO2020/054603

### SUMMARY OF INVENTION

### TECHNICAL PROBLEM

Pursuant to worldwide emission control, removal of an organic solvent to an extremely low concentration has recently been demanded. An adsorption and desorption element lowered in adsorption and desorption efficiency with use thereof should be replaced. In the adsorption and desorption treatment apparatus described in PTL 1 to PTL 3, however, in replacement of the adsorption and desorption member including the adsorption and desorption element, gas may slightly leak through a gap or the like around a bolt in an attachment region of the adsorption and desorption member. In consideration of emission control, emission of even a small amount of uncleaned gas to the atmosphere is not preferred.

An object of the present disclosure is to provide a structure for attachment of an adsorption and desorption member that prevents gas leakage in an attachment region involved with replacement of the adsorption and desorption member.

### SOLUTION TO PROBLEM

A structure for attachment of an adsorption and desorption member in the present disclosure relates to a structure for attachment of an adsorption and desorption member that is arranged in an adsorption and desorption treatment apparatus to adsorb and desorb an organic solvent, the adsorption and desorption treatment apparatus cleaning raw gas containing the organic solvent by separating the organic solvent from the raw gas and emitting cleaned gas and recovering the organic solvent separated from the raw gas with carrier gas. In an upper portion in inside of the adsorption and desorption treatment apparatus, a plate-shaped member, an annular erected wall, and an annular plate are provided, the plate-shaped member being provided with one open hole or at least two open holes for insertion of the adsorption and desorption member, the annular erected wall being erected upward from the plate-shaped member and provided to surround an edge of the open hole, the annular plate extending outward from an upper end of the annular erected wall. The adsorption and desorption member includes a cylindrical adsorption and desorption element and an attachment plate, the attachment plate being provided on an upper surface of the adsorption and desorption element and including a flange portion that extends outward from an edge of the adsorption and desorption element. An attachment region is provided at a position where the flange portion and the annular plate are superimposed on each other when the adsorption and desorption member is accommodated in the inside of the adsorption and desorption treatment apparatus by being inserted in the open hole. The attachment region includes a hexagon head bolt and a nut. The flange portion is provided with a first hole portion. The annular plate is provided with a second hole portion. In the attachment region, by insertion of the hexagon head bolt in the first hole portion and the second hole portion and tightening of a screw portion of the hexagon head bolt on an annular plate side with the nut to achieve hermetic sealing at a position where the flange portion and the annular plate are contiguous, a leakage cut-off structure is formed, the leakage cut-off structure cutting off leakage of raw gas or carrier gas.

A structure for attachment of an adsorption and desorption member in the present disclosure relates to a structure for attachment of an adsorption and desorption member that is arranged in an adsorption and desorption treatment apparatus to adsorb and desorb an organic solvent, the adsorption and desorption treatment apparatus cleaning raw gas containing the organic solvent by separating the organic solvent from the raw gas and emitting cleaned gas and recovering the organic solvent separated from the raw gas with carrier gas. In an upper portion in inside of the adsorption and desorption treatment apparatus, a plate-shaped member, an annular erected wall, and an annular plate are provided, the plate-shaped member being provided with one open hole or at least two open holes for insertion of the adsorption and desorption member, the annular erected wall being erected upward from the plate-shaped member and provided to surround an edge of the open hole, the annular plate extending outward from an upper end of the annular erected wall. The adsorption and desorption member includes a cylindrical adsorption and desorption element and an attachment plate, the attachment plate being provided on an upper surface of the adsorption and desorption element and including a flange portion that extends outward from an edge of the adsorption and desorption element. An attachment region is provided at a position where the flange portion and the annular plate are superimposed on each other when the adsorption and desorption member is accommodated in the inside of the adsorption and desorption treatment apparatus by being inserted in the open hole. The attachment region includes a bolt and a nut. The flange portion is provided with a hole portion. The annular plate is provided with a threaded portion. In the attachment region, by tightening with the nut, of the bolt screwed to the threaded portion and inserted in the hole portion to achieve hermetic sealing at a position where the flange portion and the annular plate are contiguous, a leakage cut-off structure is formed, the leakage cut-off structure cutting off leakage of raw gas or carrier gas.

In the structure for attachment of the adsorption and desorption member, in the attachment region, a space portion in a shape of a hollow column or a hollow frustum is provided between the adsorption and desorption element and the annular erected wall. Raw gas or carrier gas passes through the space portion.

In the structure for attachment of the adsorption and desorption member, the leakage cut-off structure includes a sealing member on a lower surface of the flange portion at a position on a side of the adsorption and desorption element when viewed from the nut.

### ADVANTAGEOUS EFFECTS OF INVENTION

According to this disclosure, a structure for attachment of an adsorption and desorption member that prevents gas leakage in an attachment region involved with replacement of the adsorption and desorption member can be provided.

### BRIEF DESCRIPTION OF DRAWINGS

Fig. 1 is a diagram schematically showing a construction of an organic solvent containing gas treatment system in a reference example.
Fig. 2 is an enlarged view of an attachment region.
Fig. 3 is a plan view of an adsorption and desorption treatment apparatus with some adsorption and desorption members having been removed.
Fig. 4 is an enlarged view of a C portion in Fig. 2.
Fig. 5 is an enlarged view of an attachment region in a first embodiment.
Fig. 6 is an enlarged view of an attachment region in a second embodiment.
Fig. 7 is an enlarged view of an attachment region in a third embodiment.
Fig. 8 is an enlarged view of an attachment region in a fourth embodiment.

### DESCRIPTION OF EMBODIMENTS

A structure for attachment of an adsorption and desorption member in each embodiment based on the present disclosure will be described below with reference to the drawings. When the number or an amount is mentioned in an embodiment described below, the scope of the present disclosure is not necessarily limited to the number or the amount unless otherwise specified. The same or corresponding elements have the same reference characters allotted and redundant description may not be repeated. Combination of features in the embodiment as appropriate is originally intended.

### [Reference Example]

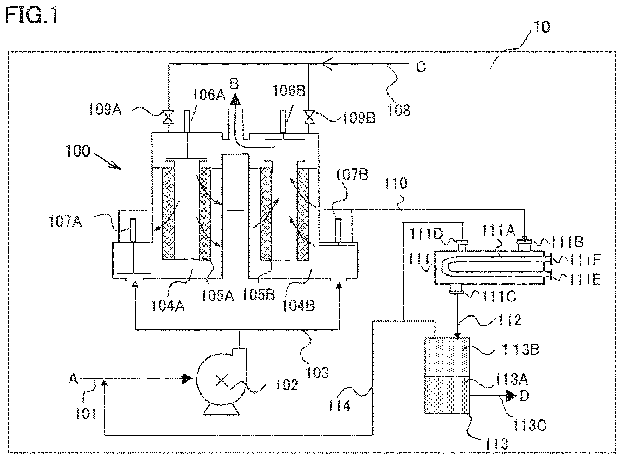

Fig. 1 is a diagram schematically showing a construction of an organic solvent containing gas treatment system in a reference example. As shown in Fig. 1, in an adsorption and desorption treatment apparatus 100 in an organic solvent containing gas treatment system 10, yet-to-be-treated gas A containing an organic solvent passes through a yet-to-be-treated gas line 101, and is sent by a yet-to-be-treated gas blower 102 through an adsorption gas line 103 to adsorbers 104A and 104B in an adsorption step as a result of opening and closing of upper dampers 106A and 106B and lower dampers 107A and 107B. Thereafter, the organic solvent is adsorbed during passage through adsorption and desorption elements 105A and 105B in the adsorbers. Yet-to-be-treated gas A becomes clean air B and is emitted to the atmosphere.

The organic solvent adsorbed to adsorption and desorption elements 105A and 105B in respective adsorbers 104A and 104B in a desorption step as a result of opening and closing of upper dampers 106A and 106B and lower dampers 107A and 107B is desorbed by water vapor C introduced through a water vapor line 108 by water vapor valves 109A and 109B, and introduced into a condenser 111 through a desorption water vapor line 110 from a condenser inlet 111A. The liquefied and condensed organic solvent is discharged through a condenser outlet 111B, sent to a separator 113 through a condensed liquid line 112, separated into separated waste water 113A and an organic solvent 113B, and recovered as a recovered solvent D. An uncondensed organic solvent in condenser 111 and separator 113 is introduced to an upstream side of yet-to-be-treated gas blower 102 through a return gas line 114.

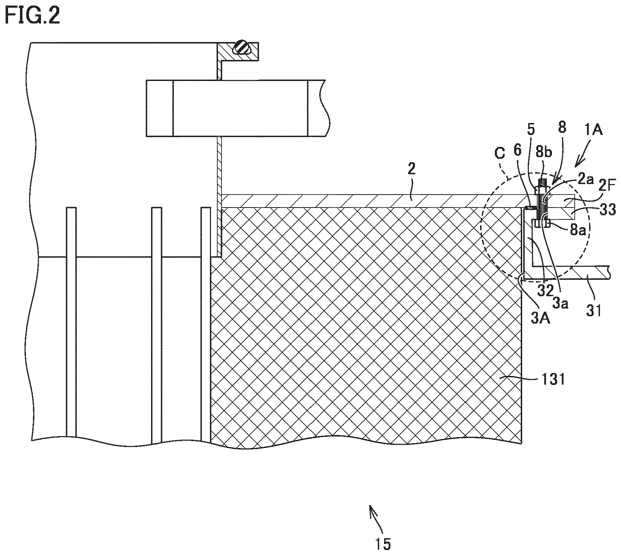

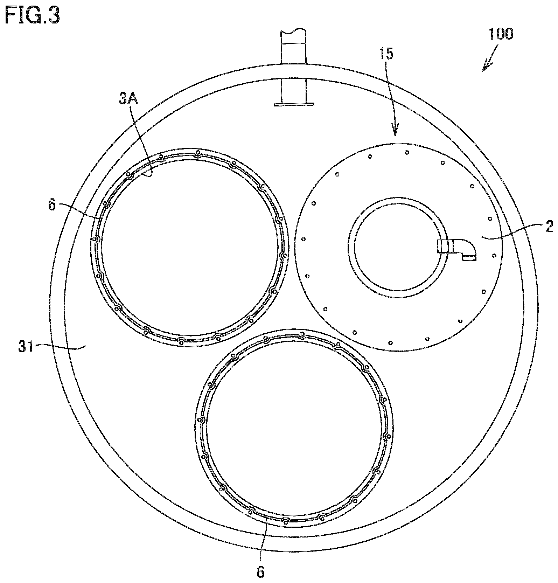

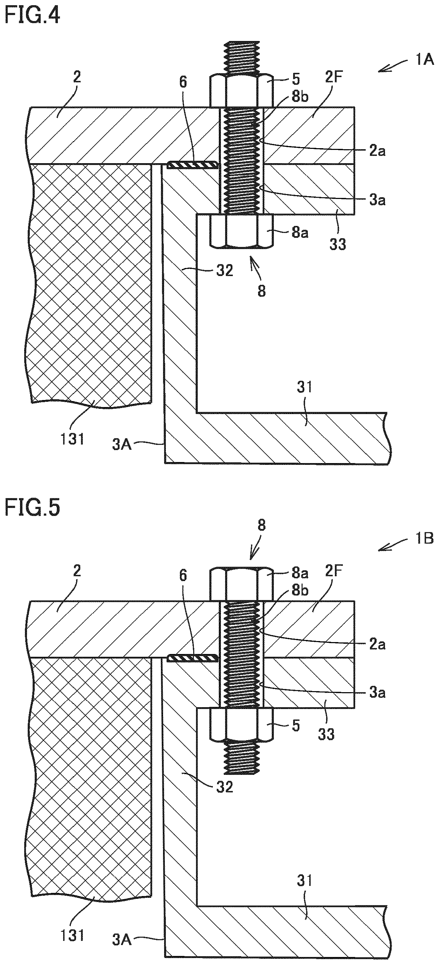

Details of adsorption and desorption treatment apparatus 100 will be described. Fig. 2 is an enlarged view of an attachment region. Fig. 3 is a plan view of the adsorption and desorption treatment apparatus with some adsorption and desorption members having been removed. Fig. 4 is an enlarged view of a C portion in Fig. 2. Adsorption and desorption treatment apparatus 100 includes an adsorption and desorption member 15 provided with adsorption and desorption elements 105A and 105B shown in Fig. 1, adsorption and desorption elements 105A and 105B each adsorbing and desorbing the organic solvent. Adsorption and desorption elements 105A and 105B shown in Fig. 1 will collectively be explained as an adsorption and desorption element 131 below.

As shown in Figs. 2 to 4, adsorption and desorption member 15 includes a cylindrical adsorption and desorption element 131 and an attachment plate 2 provided on an upper surface of adsorption and desorption element 131 and including a flange portion 2F that extends outward from an edge of adsorption and desorption element 131.

As shown in Figs. 2 to 4, adsorption and desorption member 15 includes cylindrical adsorption and desorption element 131 and attachment plate 2 provided on the upper surface of adsorption and desorption element 131 and including flange portion 2F that extends outward from the edge of adsorption and desorption element 131.

As shown in Figs. 2 to 4, in an upper portion in the inside of adsorption and desorption treatment apparatus 100, a plate-shaped member 31, an annular erected wall 32, and an annular plate 33 are provided, plate-shaped member 31 being provided with three open holes 3A for insertion of adsorption and desorption member 15, annular erected wall 32 being erected upward from plate-shaped member 31 and provided to surround an edge of open hole 3A, annular plate 33 extending outward from an upper end of annular erected wall 32. Plate-shaped member 31, annular erected wall 32, and annular plate 33 are integrally formed by press working. Annular erected wall 32 and annular plate 33 may be fixed to plate-shaped member 31 by welding.

Fig. 3 shows a state in which adsorption and desorption member 15 is attached to one of three open holes 3A. Adsorption and desorption member 15 is accommodated as being suspended in the inside of adsorption and desorption treatment apparatus 100 by insertion of cylindrical adsorption and desorption element 131 in open hole 3A and layering of flange portion 2F and annular plate 33 on each other. As shown in Fig. 4, in accommodation of adsorption and desorption element 131 in the inside of adsorption and desorption treatment apparatuses 100, a region provided at a position where flange portion 2F and annular plate 33 are superimposed on each other is referred to as an attachment region. The attachment region is described as an attachment region 1A with reference to Figs. 2 and 4.

As shown in Fig. 4, attachment region 1A includes attachment plate 2, plate-shaped member 31, annular erected wall 32, annular plate 33, a hexagon head bolt 8, a nut 5, and a sealing member 6. Attachment plate 2 is provided with a first hole portion 2a in flange portion 2F. Annular plate 33 is provided with a second hole portion 3a. In attachment region 1A, with a head 8a of hexagon head bolt 8 being placed down, a screw portion 8b of hexagon head bolt 8 inserted in second hole portion 3a and first hole portion 2a is tightened with the use of nut 5 from a flange portion 2F side.

For example, soft gasket can be used for sealing member 6. Sealing member 6 is arranged on a lower surface of flange portion 2F at a position on an adsorption and desorption element 131 side when viewed from hexagon head bolt 8. Sealing member 6 is arranged annularly around open hole 3A. Sealing member 6 annularly improves hermeticity by being compressed between flange portion 2F and annular plate 33 at the time of attachment of adsorption and desorption member 15.

Hermetic sealing at a position where flange portion 2F and annular plate 33 are contiguous is thus achieved to form a leakage cut-off structure that cuts off leakage of raw gas or carrier gas from an annular plate 33 side toward the flange portion 2F side.

According to the structure for attachment of adsorption and desorption member 15 in the reference example, the leakage cut-off structure can be formed to prevent gas leakage in attachment region 1A involved with replacement of adsorption and desorption member 15. Therefore, uncleaned gas can be prevented from being emitted to the atmosphere and adsorption and desorption treatment apparatus 100 can be used for a long period simply by replacement of adsorption and desorption member 15.

### [First Embodiment]

The attachment region of the adsorption and desorption treatment apparatus in the organic solvent containing gas treatment system in each of a first embodiment to a fourth embodiment will be described below with reference to Figs. 5 to 8. A basic construction of the organic solvent containing gas treatment system and a basic construction of the adsorption and desorption treatment apparatus are the same as the constructions shown in the reference example. Differences reside in a construction of the attachment region.

Fig. 5 is an enlarged view of an attachment region in the first embodiment. An attachment region 1B in the first embodiment includes attachment plate 2, plate-shaped member 31, annular erected wall 32, annular plate 33, hexagon head bolt 8, nut 5, and sealing member 6. Attachment plate 2 is provided with first hole portion 2a in flange portion 2F. Annular plate 33 is provided with second hole portion 3a. In attachment region 1B, with head 8a of hexagon head bolt 8 being placed up, screw portion 8b of hexagon head bolt 8 inserted in first hole portion 2a and second hole portion 3a is tightened with the use of nut 5 from the annular plate 33 side.

For example, soft gasket can be used for sealing member 6. Sealing member 6 is arranged on the lower surface of flange portion 2F at a position on the adsorption and desorption element 131 side when viewed from hexagon head bolt 8. Sealing member 6 is arranged annularly around open hole 3A. Sealing member 6 annularly improves hermeticity by being compressed between flange portion 2F and annular plate 33 at the time of attachment of adsorption and desorption member 15.

Hermetic sealing at a position where flange portion 2F and annular plate 33 are contiguous is thus achieved to form a leakage cut-off structure that cuts off leakage of raw gas or carrier gas from the annular plate 33 side toward the flange portion 2F side.

According to the structure for attachment of adsorption and desorption member 15 in the first embodiment, the leakage cut-off structure can be formed to prevent gas leakage in attachment region 1B involved with replacement of adsorption and desorption member 15. Therefore, uncleaned gas can be prevented from being emitted to the atmosphere and adsorption and desorption treatment apparatus 100 can be used for a long period simply by replacement of adsorption and desorption member 15.

### [Second Embodiment]

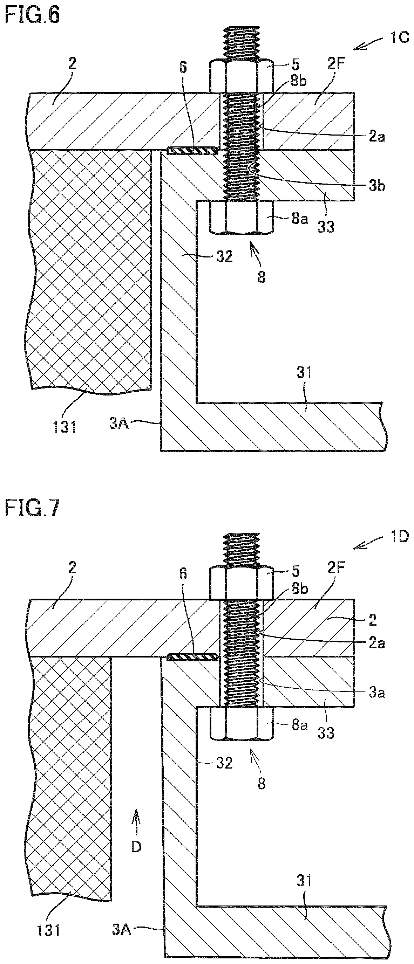

Fig. 6 is an enlarged view of an attachment region in a second embodiment. An attachment region 1C in the second embodiment includes attachment plate 2, plate-shaped member 31, annular erected wall 32, annular plate 33, hexagon head bolt 8, nut 5, and sealing member 6. Attachment plate 2 is provided with first hole portion 2a in flange portion 2F. Annular plate 33 is provided with a threaded portion 3b. In attachment region 1C, with head 8a of hexagon head bolt 8 being placed down, screw portion 8b of hexagon head bolt 8 is screwed to threaded portion 3b. Then, in attachment region 1C, screw portion 8b of hexagon head bolt 8 is inserted in first hole portion 2a, and inserted screw portion 8b of hexagon head bolt 8 is tightened with the use of nut 5 from the flange portion 2F side.

For example, soft gasket can be used for sealing member 6. Sealing member 6 is arranged on the lower surface of flange portion 2F at a position on the adsorption and desorption element 131 side when viewed from hexagon head bolt 8. Sealing member 6 is arranged annularly around open hole 3A. Sealing member 6 annularly improves hermeticity by being compressed between flange portion 2F and annular plate 33 at the time of attachment of adsorption and desorption member 15.

Hermetic sealing at a position where flange portion 2F and annular plate 33 are contiguous is thus achieved to form a leakage cut-off structure that cuts off leakage of raw gas or carrier gas from the annular plate 33 side toward the flange portion 2F side.

According to the structure for attachment of adsorption and desorption member 15 in the second embodiment, the leakage cut-off structure can be formed to prevent gas leakage in attachment region 1A involved with replacement of adsorption and desorption member 15. Therefore, uncleaned gas can be prevented from being emitted to the atmosphere and adsorption and desorption treatment apparatus 100 can be used for a long period simply by replacement of adsorption and desorption member 15.

### [Third Embodiment]

Fig. 7 is an enlarged view of an attachment region in a third embodiment. An attachment region 1D in the third embodiment includes attachment plate 2, plate-shaped member 31, annular erected wall 32, annular plate 33, hexagon head bolt 8, nut 5, and sealing member 6. Attachment plate 2 is provided with first hole portion 2a in flange portion 2F. Annular plate 33 is provided with second hole portion 3a. In attachment region 1D, with head 8a of hexagon head bolt 8 being placed down, screw portion 8b of hexagon head bolt 8 inserted in second hole portion 3a and first hole portion 2a is tightened with the use of nut 5 from the flange portion 2F side.

In attachment region 1D, a space portion D in a shape of a hollow column is provided between adsorption and desorption element 131 and annular erected wall 32. Raw gas or carrier gas passes through space portion D. Since a gap as large as space portion D is provided on the adsorption and desorption element 131 side of annular erected wall 32 as compared with the reference example, adsorption and desorption element 131 can efficiently be used as far as a portion close to attachment plate 2.

For example, soft gasket can be used for sealing member 6. Sealing member 6 is arranged on the lower surface of flange portion 2F at a position on the adsorption and desorption element 131 side when viewed from hexagon head bolt 8. Sealing member 6 is arranged annularly around open hole 3A. Sealing member 6 annularly improves hermeticity by being compressed between flange portion 2F and annular plate 33 at the time of attachment of adsorption and desorption member 15.

Hermetic sealing at a position where flange portion 2F and annular plate 33 are contiguous is thus achieved to form a leakage cut-off structure that cuts off leakage of raw gas or carrier gas from the annular plate 33 side toward the flange portion 2F side.

According to the structure for attachment of adsorption and desorption member 15 in the third embodiment, the leakage cut-off structure can be formed to prevent gas leakage in attachment region 1D involved with replacement of adsorption and desorption member 15. Therefore, uncleaned gas can be prevented from being emitted to the atmosphere and adsorption and desorption treatment apparatus 100 can be used for a long period simply by replacement of adsorption and desorption member 15.

### [Fourth Embodiment]

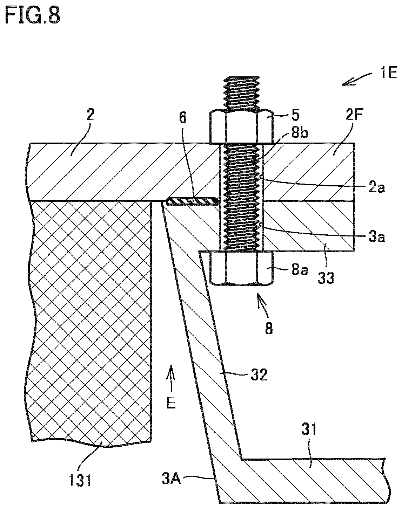

Fig. 8 is an enlarged view of an attachment region in a fourth embodiment. An attachment region 1E in the fourth embodiment includes attachment plate 2, plate-shaped member 31, annular erected wall 32, annular plate 33, hexagon head bolt 8, nut 5, and sealing member 6. Attachment plate 2 is provided with first hole portion 2a in flange portion 2F. Annular plate 33 is provided with second hole portion 3a. In attachment region 1E, with head 8a of hexagon head bolt 8 being placed down, screw portion 8b of hexagon head bolt 8 inserted in second hole portion 3a and first hole portion 2a is tightened with the use of nut 5 from the flange portion 2F side.

In attachment region 1E, annular erected wall 32 is in a shape extending obliquely upward from plate-shaped member 31 toward annular plate 33. Thus, in attachment region 1E, a space portion E in a shape of a hollow frustum is provided between adsorption and desorption element 131 and annular erected wall 32. Raw gas or carrier gas passes through space portion E. Since a gap as large as space portion E is provided on the adsorption and desorption element 131 side of annular erected wall 32 as compared with the reference example, adsorption and desorption element 131 can efficiently be used as far as a portion close to attachment plate 2.

For example, soft gasket can be used for sealing member 6. Sealing member 6 is arranged on the lower surface of flange portion 2F at a position on the adsorption and desorption element 131 side when viewed from hexagon head bolt 8. Sealing member 6 is arranged annularly around open hole 3A. Sealing member 6 annularly improves hermeticity by being compressed between flange portion 2F and annular plate 33 at the time of attachment of adsorption and desorption member 15.

Hermetic sealing at a position where flange portion 2F and annular plate 33 are contiguous is thus achieved to form a leakage cut-off structure that cuts off leakage of raw gas or carrier gas from the annular plate 33 side toward the flange portion 2F side.

According to the structure for attachment of adsorption and desorption member 15 in the fourth embodiment, the leakage cut-off structure can be formed to prevent gas leakage in attachment region 1E involved with replacement of adsorption and desorption member 15. Therefore, uncleaned gas can be prevented from being emitted to the atmosphere and adsorption and desorption treatment apparatus 100 can be used for a long period simply by replacement of adsorption and desorption member 15.

### [Other Embodiments]

In the embodiments, sealing member 6 does not have to be provided. In order to facilitate positioning of sealing member 6, an annular groove may be provided in annular plate 33.

In the embodiments, one adsorption and desorption member 15, two adsorption and desorption members 15, or four or more adsorption and desorption members 15 may be provided. Adsorption and desorption element 131 may be in a shape other than a cylindrical shape. For example, adsorption and desorption element 131 may have a structure in a shape of a hollow quadrangular prism. In this case, attachment plate 2 should only be in a quadrangular shape also in conformity with the shape of adsorption and desorption element 131. A plurality of attachment regions may be aligned in a quadrangular shape in a plan view. Arrangement of the attachment regions may thus be varied in conformity with the shape of adsorption and desorption element 131.

In each embodiment above, annular plate 33 may be provided with threaded portion 3b shown in the second embodiment. In each embodiment above, head 8a of hexagon head bolt 8 may be arranged on the attachment plate 2 side as shown in the first embodiment.

In the embodiments, a sealing tape may be wound around a screw portion of each bolt. By winding the sealing tape, hermeticity can be enhanced and the bolt can be protected. The sealing tape is formed, for example, of a polytetrafluoroethylene material.

It should be understood that the embodiments disclosed herein are illustrative and non-restrictive in every respect. The scope of the present disclosure is defined by the terms of the claims rather than the description above and is intended to include any modifications within the scope and meaning equivalent to the terms of the claims.

### REFERENCE SIGNS LIST

1A to 1E attachment region; 2 attachment plate; 2F flange portion; 2a first hole portion; 3A open hole; 3a second hole portion; 3b threaded portion; 5 nut; 6 sealing member; 8 hexagon head bolt; 8a head; 8b screw portion; 10 organic solvent containing gas treatment system; 15 adsorption and desorption member; 31 plate-shaped member; 32 annular erected wall; 33 annular plate; 100 adsorption and desorption treatment apparatus; 105A, 105B, 131 adsorption and desorption element; 101 yet-to-be-treated gas line; 102 yet-to-be-treated gas blower; 103 adsorption gas line; 104A, 104B adsorber; 106A, 106B upper damper; 107A, 107B lower damper; 108 water vapor line; 109A, 109B water vapor valve; 110 desorption water vapor line; 111 condenser; 111A cooling water pipe; 111B condenser inlet; 111C condenser outlet; 111D return gas outlet; 111E cooling water inlet; 111F cooling water outlet; 112 condensed liquid line; 113 separator; 113A separated waste water; 113B organic solvent; 113C waste liquid line; 114 return gas line; A yet-to-be-treated gas; B cleaned air; C water vapor; D recovered solvent

## Claims

1. A structure for attachment of an adsorption and desorption member that is arranged in an adsorption and desorption treatment apparatus to adsorb and desorb an organic solvent, the adsorption and desorption treatment apparatus cleaning raw gas containing the organic solvent by separating the organic solvent from the raw gas and emitting cleaned gas and recovering the organic solvent separated from the raw gas with carrier gas, wherein
in an upper portion in inside of the adsorption and desorption treatment apparatus, a plate-shaped member, an annular erected wall, and an annular plate are provided, the plate-shaped member being provided with one open hole or at least two open holes for insertion of the adsorption and desorption member, the annular erected wall being erected upward from the plate-shaped member and provided to surround an edge of the open hole, the annular plate extending outward from an upper end of the annular erected wall,
the adsorption and desorption member includes a cylindrical adsorption and desorption element and an attachment plate, the attachment plate being provided on an upper surface of the adsorption and desorption element and including a flange portion that extends outward from an edge of the adsorption and desorption element,
an attachment region is provided at a position where the flange portion and the annular plate are superimposed on each other when the adsorption and desorption member is accommodated in the inside of the adsorption and desorption treatment apparatus by being inserted in the open hole,
the attachment region includes a hexagon head bolt and a nut,
the flange portion is provided with a first hole portion,
the annular plate is provided with a second hole portion, and
in the attachment region, by insertion of the hexagon head bolt in the first hole portion and the second hole portion and tightening of a screw portion of the hexagon head bolt on an annular plate side with the nut to achieve hermetic sealing at a position where the flange portion and the annular plate are contiguous, a leakage cut-off structure is formed, the leakage cut-off structure cutting off leakage of raw gas or carrier gas.

2. A structure for attachment of an adsorption and desorption member that is arranged in an adsorption and desorption treatment apparatus to adsorb and desorb an organic solvent, the adsorption and desorption treatment apparatus cleaning raw gas containing the organic solvent by separating the organic solvent from the raw gas and emitting cleaned gas and recovering the organic solvent separated from the raw gas with carrier gas, wherein
in an upper portion in inside of the adsorption and desorption treatment apparatus, a plate-shaped member, an annular erected wall, and an annular plate are provided, the plate-shaped member being provided with one open hole or at least two open holes for insertion of the adsorption and desorption member, the annular erected wall being erected upward from the plate-shaped member and provided to surround an edge of the open hole, the annular plate extending outward from an upper end of the annular erected wall,
the adsorption and desorption member includes a cylindrical adsorption and desorption element and an attachment plate, the attachment plate being provided on an upper surface of the adsorption and desorption element and including a flange portion that extends outward from an edge of the adsorption and desorption element,
an attachment region is provided at a position where the flange portion and the annular plate are superimposed on each other when the adsorption and desorption member is accommodated in the inside of the adsorption and desorption treatment apparatus by being inserted in the open hole,
the attachment region includes a bolt and a nut,
the flange portion is provided with a hole portion,
the annular plate is provided with a threaded portion, and
in the attachment region, by tightening with the nut, of the bolt screwed to the threaded portion and inserted in the hole portion to achieve hermetic sealing at a position where the flange portion and the annular plate are contiguous, a leakage cut-off structure is formed, the leakage cut-off structure cutting off leakage of raw gas or carrier gas.

3. The structure for attachment of an adsorption and desorption member according to claim 1 or 2, wherein
in the attachment region, a space portion in a shape of a hollow column or a hollow frustum is provided between the adsorption and desorption element and the annular erected wall, and
raw gas or carrier gas passes through the space portion.

4. The structure for attachment of an adsorption and desorption member according to any one of claims 1 to 3, wherein
the leakage cut-off structure includes a sealing member on a lower surface of the flange portion at a position on a side of the adsorption and desorption element when viewed from the nut.
